# FASCICULE DE BREVET EUROPEEN

(11) **EP 0 609 550 B1**
(45) Date de publication et mention de la délivrance du brevet: **06.05.1998**
(21) Numéro de dépôt: 93120652.8
(22) Date de dépôt: 22.12.1993
(51) Int. Cl.: B29C 47/32

(54) **Appareil d'extrusion et procédé d'extrusion pour mélanges de caoutchouc cru**
Vorrichtung und Verfahren zur Extrusion von Rohkautschukmischungen
Apparatus and process for extrusion of raw rubber mixtures

(30) Priorité: 08.01.1993 FR 9300192
(43) Date de publication de la demande: 10.08.1994
(73) Titulaire: COMPAGNIE GENERALE DES ETABLISSEMENTS MICHELIN - MICHELIN & CIE, 63040 Clermont-Ferrand Cédex (FR)
(72) Inventeur: Bardy, Daniel, F-63100 Clermont-Ferrand (FR)
(74) Mandataire: Bauvir, Jacques

(56) Documents cités:
- EP-A- 0 484 868
- DE-A- 1 479 111
- GB-A- 2 249 518
- US-A- 2 382 177
- PLASTIQUES ELASTOMERES vol. 31, no. 5 , Juin 1979 , PARIS pages 79 - 81 'Une filiére pour graver en extrudant'

## Description

La présente invention concerne l'extrusion de produits en caoutchouc. Plus précisément, elle se rapporte à la fabrication d'un produit profilé complexe constitué de mélanges de caoutchouc de différentes compositions.

Pour l'extrusion de caoutchouc cru, l'état de la technique connait déjà une catégorie d'appareils que l'on appelle extrudeuses nez à rouleau. Cela permet d'extruder, en grande longueur, un produit dont le profil est constant. Ce profil, c'est-à-dire la section du produit en caoutchouc extrudé, est défini dans ce type d'appareil d'une part par le rouleau sur lequel le caoutchouc est extrudé, et d'autre part par une paroi fixe qui coopère avec le rouleau pour délimiter un orifice d'extrusion.

Par ailleurs, la fabrication de pneumatiques nécessite à l'heure actuelle de réaliser des produits semi-finis profilés qui sont constitués par des mélanges de caoutchouc ayant des propriétés différentes que l'on désigne dans la suite en toute généralité par "produit complexe". Ainsi, par exemple, il faut réaliser une bande de roulement dont la section a une forme qui approche celle que la bande de roulement aura lorsque le pneumatique sera moulé, et qui est constituée par des mélanges de compositions différentes selon la position transversale dans le futur pneumatique. L'état de la technique connaît déjà, par le brevet US 4 539 169, un appareil de co-extrusion sur nez à rouleau. Selon ce brevet, on réalise un produit de co-extrusion en extrudant chacun des mélanges de caoutchouc à un endroit différent de la surface du rouleau, de façon à former progressivement le produit profilé de co-extrusion.

Une autre technique de coextrusion permettant de fabriquer un produit complexe est décrite dans le brevet US 2 382 177, dans lequel on profile un premier mélange par refoulement forcé entre deux parois fixes, on profile un second mélange en créant un bourrelet de caoutchouc entre une paroi fixe et une paroi mobile, et on amène le premier mélange sur le second dans l'intervalle entre deux rouleaux.

On cherche à fabriquer des pneumatiques de façon sans cesse plus précise. La précision de fabrication dépend notamment du respect des dimensions des produits en caoutchouc dont l'assemblage constitue le pneumatique. En d'autres termes, lorsque l'on utilise un produit complexe lors de l'assemblage du pneumatique, il est très important que la ou les lignes de séparation entre les mélanges de caoutchouc de compositions différentes soient géométriquement rigoureusement respectées. Or, on sait que les propriétés mécaniques des mélanges de caoutchouc sont très mauvaises avant la vulcanisation de ces mélanges. Dans certains cas, le mélange de caoutchouc cru se présente comme une pâte extrêment molle, alors que d'autres mélanges de caoutchouc peuvent, même avant vulcanisation, être relativement durs. Lorsque l'on cherche à co-extruder un mélange de caoutchouc très mou en même temps qu'un mélange de caoutchouc très dur, il est difficile de maîtriser parfaitement la géométrie de la surface de séparation entre les deux mélanges de propriétés très différentes.

Malgré les difficultés rencontrées, il est souhaitable d'utiliser des produits complexes lors de l'assemblage du pneumatique, car cela diminue le nombre de pose de produits qu'il est nécessaire d'effectuer au stade de l'assemblage sur tambour. Or, le nombre de mélanges de caoutchouc différents utilisés pour fabriquer un seul pneumatique a tendance à augmenter, afin de pouvoir optimiser les propriétés de ces mélanges en fonction de la zone du pneumatique dans laquelle ils sont localisés.

L'objectif de la présente invention est de proposer un appareil et un procédé d'extrusion qui permette de fabriquer un produit profilé constitué de mélanges de caoutchouc de différentes compositions et qui soit capable de respecter rigoureusement la position des lignes de séparation entre les produits caoutchouc différents que l'on souhaite obtenir.

Selon l'invention, l'appareil d'extrusion pour fabriquer un un produit constitué de différents mélanges de caoutchouc cru, comportant un premier rouleau rotatif et au moins un autre rouleau rotatif qui est profilé, le rouleau profilé étant disposé de façon ajacente au premier rouleau, les axes de rotation des rouleaux étant parallèles, de façon à définir entre les rouleaux une section de passage pour le caoutchouc, et comportant des moyens permettant d'amener les différents mélanges dans ladite section de passage, est caractérisé en ce que lesdits moyens comportent une première extrudeuse refoulant un mélange de caoutchouc au travers d'un orifice d'extrusion comportant une paroi fixe coopérant avec ledit premier rouleau rotatif pour définir le profil du premier mélange, et en ce qu'il comporte une deuxième extrudeuse refoulant un deuxième mélange de caoutchouc au travers d'un orifice d'extrusion comportant une paroi fixe coopérant avec ledit rouleau rotatif profilé pour définir le profil du deuxième mélange de caoutchouc, le produit profilé final étant formé par la superposition des mélanges à leur passage entre les rouleaux.

De préférence, on utilise des extrudeuses à vis. L'invention permet de faire porter la régulation à la fois sur la vitesse des vis qui propulsent le mélange de caoutchouc à l'extérieur des extrudeuses et sur la vitesse des deux rouleaux. En agissant séparément sur toutes ces vitesses, il est possible de maîtriser parfaitement la ligne de séparation entre des mélanges de propriétés très différentes. Dans la plupart des applications industrielles, on ne va pas au-delà de deux mélanges de composition différente extrudés simultanément, ce qui fait que l'invention s'avère très intéressante.

De préférence, le premier rouleau est cylindrique. Il est en général toujours possible de, quel que soit le profil du produit complexe à fabriquer, le transformer en un profil incluant une ligne droite qui peut résulter de l'extrusion sur une surface cylindrique. Le complexe prendra ensuite, par déformation plastique, l'allure finale réelle qui peut être légèrement différente. Cette déformation plastique survient par exemple lors de l'assemblage d'un pneumatique par enroulement du complexe sur un tambour.

L'invention propose également un procédé d'extrusion pour former un produit complexe profilé constitué par au moins deux mélanges de caoutchouc différents disposés de part et d'autre d'au moins une ligne de séparation, consistant à appliquer sur un premier rouleau en rotation un premier produit présentant un profil incluant ladite ligne de séparation, à appliquer sur un rouleau profilé, contra-rotatif, disposé de façon ajacente au premier rouleau de façon à délimiter entre les rouleaux un passage ayant un profil déterminé, ledit passage étant éloigné en aval de l'endroit où l'on applique le premier produit, à appliquer en un endroit éloigné en amont dudit passage, un second produit présentant un profil incluant ladite ligne de séparation, de sorte que le premier produit et le second produit se superposent le long de ladite ligne de séparation, au passage entre lesdits rouleaux, lorsqu'il y sont entraînés par la rotation desdits rouleaux.

De préférence, le premier rouleau est cylindrique, ce qui simplifie l'utilisation de ce procédé.

La description suivante permet de bien comprendre le fonctionnement de la présente invention, en la consultant en parallèle avec les figures jointes.
La figure 1 est une vue en coupe d'un mode de réalisation de l'appareil d'extrusion, selon I/I à la figure 2.
La figure 2 est une coupe selon II/II à la figure 1.
La figure 3 est une coupe au travers des produits en caoutchouc tels qu'ils apparaissent en III/III à la figure 1.
La figure 4 est une coupe montrant le produit complexe final.
La figure 5 est un agrandissement d'une partie de la figure 1.

Dans la présente description, on appelle "profil" d'un produit, l'allure de la section de ce produit prise dans un plan perpendiculaire à sa grande longueur, que ce soit sur le produit final ou sur le produit partiel correspondant à une phase de la fabrication d'un produit complexe. Pour rappel, le produit est qualifié de "complexe" lorsqu'il est réalisé à partir d'au moins deux mélanges de caoutchouc de compositions différentes. Enfin, lorsque l'on parle de profil d'un outillage, il s'agit de la forme de l'orifice au travers duquel on extrude le caoutchouc. Lorsqu'il s'agit d'un rouleau profilé, c'est la forme d'une section radiale de ce rouleau. Lorsqu'il s'agit d'une paroi fixe, c'est la forme de la section faite par un plan perpendiculaire à la direction d'écoulement du caoutchouc.

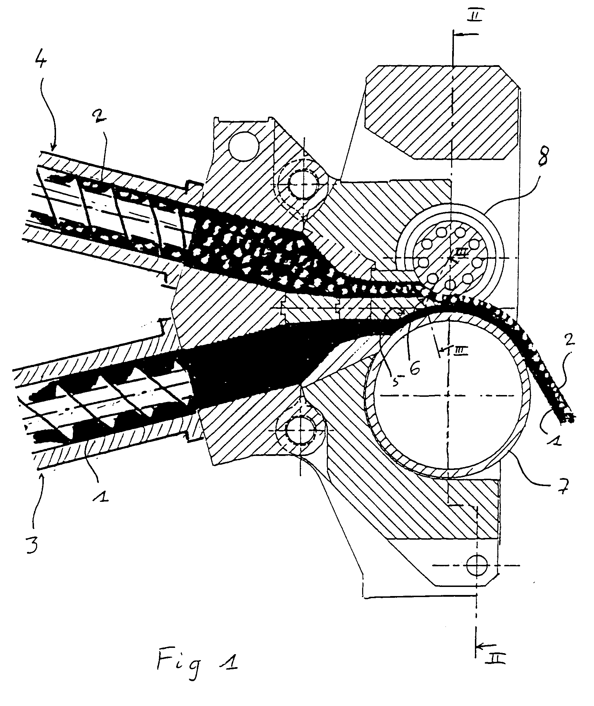

A la figure 1, on voit une extrudeuse 3 refoulant un premier mélange de caoutchouc 1 et une extrudeuse 4 refoulant un second mélange de caoutchouc 2. On voit également un rouleau cylindrique 7. Un rouleau est qualifié de cylindrique lorsque la surface de ce rouleau est parfaitement cylindrique. C'est donc le même rouleau 7 qui est utilisé, quelle que soit la forme du profil que l'on souhaite réaliser avec le mélange 1. Comme cela est bien connu dans les extrudeuses nez à rouleau, on obtient le profil souhaité pour le mélange 1 en choisissant de façon adéquate la forme de la paroi fixe 5 associée au rouleau 7 pour définir un orifice d'extrusion 9.

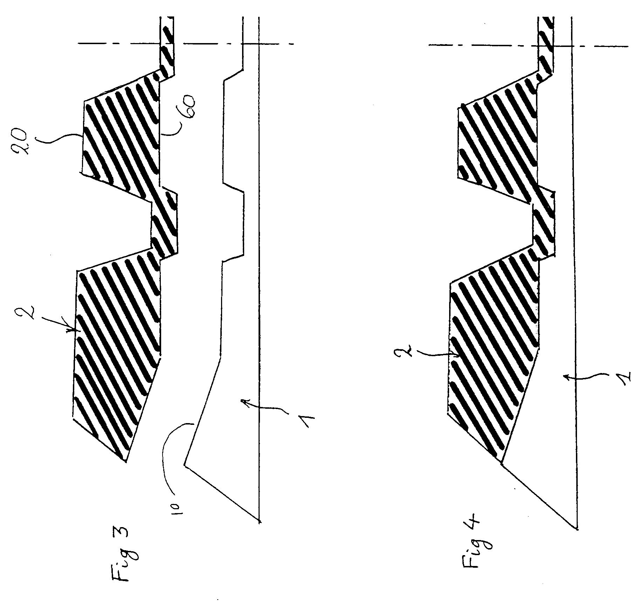

A la figure 3, la partie supérieure 10 du profil du mélange 1 est l'image du profil de la paroi fixe 5.

L'appareil comporte un deuxième rouleau 8 dont l'axe de rotation est parallèle à l'axe de rotation du premier rouleau 7. Les deux rouleaux 7 et 8 sont contra-rotatifs et disposés de façon adjacente en délimitant entre eux un passage 78. Le rouleau 8 est profilé. C'est par la forme de la surface extérieure du rouleau profilé 8 que l'on imprime au caoutchouc extrudé le profil global souhaité. Le rouleau profilé 8 est donc un outillage que l'on change chaque fois que l'on change de produits profilés.

A la figure 3, la partie supérieure 20 du profil du mélange 2 est l'image de la forme du rouleau profilé 8.

L'appareil comporte une seconde extrudeuse 4 qui refoule un mélange de caoutchouc 2 différent du mélange 1. Ce mélange 2 est appliqué sur le rouleau profilé 8 en amont du pasage 78, et est lui-même profilé par la paroi fixe 6.

A la figure 3, la partie inférieure 60 du profil du mélange 2 est l'image de la forme de la paroi fixe 6. On voit que le profil de la paroi fixe coopérant avec le rouleau profilé est de forme complémentaire au profil de la paroi fixe 5 coopérant avec le rouleau cylindrique 7.

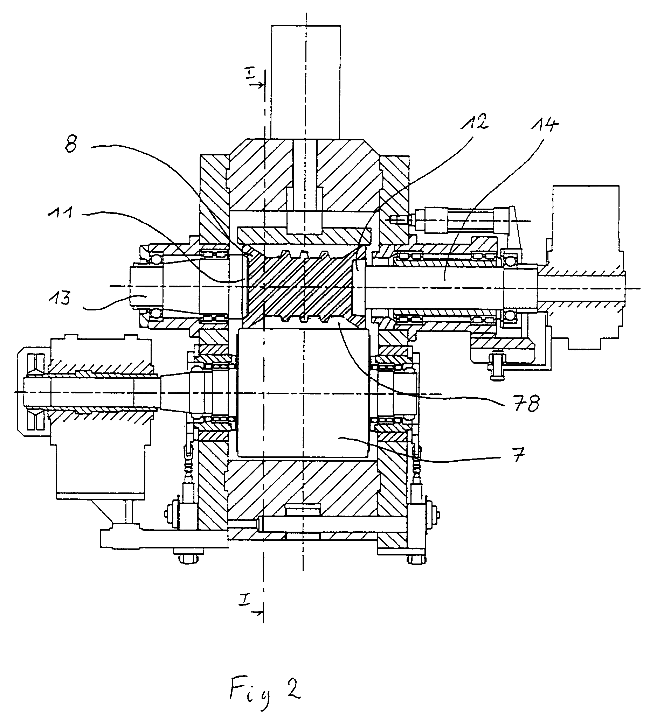

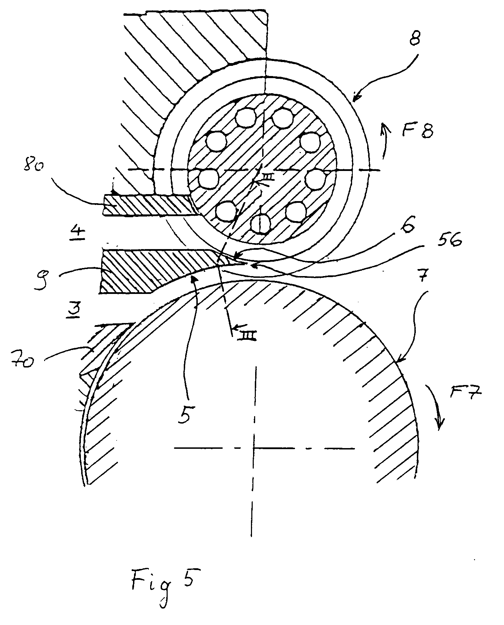

La mise en oeuvre de l'invention consiste donc à réaliser deux extrusions simples sur nez à rouleau, et à disposer les rouleaux 7 et 8 de telle sorte que l'on puisse faire un doublage à chaud des mélanges extrudés immédiatement en aval de leurs points d'extrusion et avant que les mélanges extrudés ne quittent le contact avec les rouleaux rotatifs. Ce doublage intervient dans l'espace ou passage 78 situé entre les rouleaux 7 et 8 (voir figure 2). Le produit final apparaît à la figure 4.

Cela permet d'assurer une très grande régularité et une très grande précision des produits extrudés. L'utilisation de l'invention est tout particulièrement intéressante lorsque les mélanges utilisés sont de nature très différente. En effet, on ne constate aucune dispersion ou fluctuation de la ligne de séparation entre des caoutchouc de propriétés très différentes contrairement à ce que l'on a pu observer en utilisant les techniques de co-extrusion.

Suivant un mode de réalisation de l'invention, la paroi fixe 5 associée au rouleau cylindrique 7 et la paroi fixe 6 associée au rouleau profilé 8 sont réalisés sur une seule et même pièce 9 (voir figure 5), qui constitue un outillage qu'il faut changer chaque fois que l'on change de produit complexe profilé à fabriquer. A la figure 5, on voit également que, du côté amont par rapport aux sens de rotation des rouleaux 7 et 8, indiqués par les flèches F7 et F8, on a diposé deux inserts d'étanchéité 70 et 80 pour éviter que, sous l'effet de la pression de refoulement des extrudeuses, le mélange ne flue pas dessus les rouleaux rotatifs, dans la direction contraire au sens de rotation. L'insert d'étanchéité 80 épouse la surface du rouleau profilé 8. Il s'agit donc d'un outillage associé à ce rouleau profilé 8 ; il est changé en même temps que le rouleau profilé.

Afin d'en faciliter le changement, le rouleau profilé 8 est pris entre deux emmanchements coniques 11 et 12. L'emmanchement conique 11 fait partie d'un support rotatif 13 à rotation libre. L'emmanchement conique 12 est disposé à l'extrémité de l'arbre de transmission 14, qui peut reculer axialement pour libérer le rouleau profilé 8.

Un autre avantage de l'invention par rapport à la technique de co-extrusion sur nez à rouleau est que la mise au point des outillages spécifique de chaque produit profilé en caoutchouc est extrêmement simple. Grâce aux possibilités de régulation de la vitesse de chacun des deux rouleaux, il est en effet possible d'atteindre une bonne précision et une bonne régularité de fabrication sans devoir optimiser la forme exacte de la surface du rouleau profilé et des parois fixes de 5 et 6. La régulation est basée sur l'utilisation d'au moins une sonde de pression (non représentée), disposée dans le nez de l'extrudeuse concernée, permettant de réguler le débit de l'extrudeuse 3 ou 4 et la vitesse du rouleau 7 ou 8 correspondant.

De préférence, les parois fixes 5 et 6 sont sécantes et l'intersection 56 des profils complémentaires de ces parois fixes est disposée sensiblement au niveau du plan joignant les axes de rotation des deux rouleaux 7 et 8. De préférence, les parois 5 et 6 sont des surfaces de révolution, centrées approximativement sur l'axe de rotation du rouleau associé 7 ou 8. Cela a pour conséquence que chaque paroi 5 ou 6 est écartée par rapport à la surface du rouleau associé d'une valeur sensiblement constante pour toute position circonférentielle tout le long de ladite paroi.

En résumé, chacun des deux mélanges de caoutchouc poussé par son extrudeuse est d'abord mis en forme et appliqué sur l'un des deux rouleaux auquel il adhère. La jonction des deux profils partiels se fait entre les deux rouleaux.

## Revendications

1. Appareil d'extrusion pour fabriquer un produit constitué de différents mélanges de caoutchouc cru, comportant un premier rouleau rotatif (7) et au moins un autre rouleau rotatif qui est profilé (8), le rouleau profilé étant disposé de façon adjacente au premier rouleau (7), les axes de rotation des rouleaux étant parallèles, de façon à définir entre les rouleaux une section de passage pour le caoutchouc, et comportant des moyens permettant d'amener les différents mélanges dans ladite section de passage, caractérisé en ce que lesdits moyens comportent une première extrudeuse (3) refoulant un mélange de caoutchouc (1) au travers d'un orifice d'extrusion comportant une paroi fixe (5) coopérant avec ledit premier rouleau rotatif (7) pour définir le profil du premier mélange, et en ce qu'il comporte une deuxième extrudeuse (4) refoulant un deuxième mélange (2) de caoutchouc au travers d'un orifice d'extrusion comportant une paroi fixe (6) coopérant avec ledit rouleau rotatif profilé (8) pour définir le profil du deuxième mélange de caoutchouc, le produit profilé final étant formé par la superposition des mélanges à leur passage entre les rouleaux (7) et (8).

2. Appareil selon la revendication 1, caractérisé en ce que le profil de la paroi fixe (6) coopérant avec le rouleau profilé (8) est de forme complémentaire au profil de la paroi fixe (5) coopérant avec le premier rouleau (7).

3. Appareil selon l'une des revendications 1 à 2, caractérisé en ce que lesdites parois fixes (5, 6) sont sécantes.

4. Appareil selon l'une des revendications 1 à 3, caractérisé en ce que lesdites parois fixes (5, 6) sont réalisées sur une seule et même pièce.

5. Appareil selon l'une des revendications 1 à 4, caractérisé en ce que le premier rouleau (7) est cylindrique.

6. Appareil selon l'une des revendications 1 à 5, caractérisé en ce que chaque paroi fixe (5 ou 6) est écartée par rapport à la surface du rouleau associé d'une valeur sensiblement constante pour toute position circonférentielle tout le long de ladite paroi.

7. Appareil selon l'une des revendications 1 à 6, caractérisé en ce qu'il comporte au moins une sonde de pression permettant de réguler le débit de l'extrudeuse (3 ou 4) et la vitesse du rouleau (7 ou 8) correspondant.

8. Procédé d'extrusion pour former un produit complexe profilé constitué par au moins deux mélanges de caoutchouc différents disposés de part et d'autre d'au moins une ligne de séparation, consistant à appliquer sur un premier rouleau (7) en rotation un premier produit profile (1) au moyen d'une paroi fixe (5) coopérant avec ledit premier rouleau rotatif (7) pour définir le profil du premier mélange qui inclut ladite ligne de séparation, consistant à appliquer sur un rouleau profilé (8), contra-rotatif, disposé de façon adjacente au premier rouleau (7) de façon à délimiter entre les rouleaux un passage ayant un profil déterminé, ledit passage étant éloigné en aval de l'endroit où l'on applique le premier produit, à appliquer en un endroit éloigné en amont dudit passage, un second produit (2) présentant un profil incluant ladite ligne de séparation, de sorte que le premier produit (1) et le second produit (2) se superposent le long de ladite ligne de séparation, au passage entre lesdits rouleaux, lorsqu'il y sont entraînés par la rotation desdits rouleaux.

9. Procédé selon la revendication 8, caractérisé en ce que le premier rouleau est cylindrique.

10. Procédé selon la revendication 8 ou 9, caractérisé en ce que le premier produit est-appliqué sur le premier rouleau au moyen d'au moins une extrudeuse.

11. Procédé selon l'une des revendications 8 ou 10, caractérisé en ce que le second produit est appliqué sur le rouleau profilé au moyen d'au moins une extrudeuse.

## Claims

1. An extrusion apparatus for manufacturing a product formed of different mixes of raw rubber, comprising a first rotary roller (7) and at least one other rotary roller (8) which is profiled, the profiled roller being arranged adjacent to the first roller (7), the axes of rotation of the rollers being parallel so as to define between the rollers a passage section for the rubber, and comprising means which make it possible to feed the different mixes into said passage section, characterised in that said means comprise a first extruder (3) delivering a rubber mix (1) through an extrusion orifice comprising a fixed wall (5) cooperating with said first rotary roller (7) to define the profile of the first mix, and in that it comprises a second extruder (4) delivering a second rubber mix (2) through an extrusion orifice comprising a fixed wall (6) cooperating with said profiled rotary roller (8) to define the profile of the second rubber mix, the final profiled product being formed by superposing the mixes upon their passage between the rollers (7) and (8).

2. An apparatus according to Claim 1, characterised in that the profile of the fixed wall (6) which cooperates with the profiled roller (8) is of a shape complementary to the profile of the fixed wall (5) which cooperates with the first roller (7).

3. An apparatus according to one of Claims 1 to 2, characterised in that said fixed walls (5, 6) intersect.

4. An apparatus according to one of Claims 1 to 3, characterised in that said fixed walls (5, 6) are developed on one and the same part.

5. An apparatus according to one of Claims 1 to 4, characterised in that the first roller (7) is cylindrical.

6. An apparatus according to one of Claims 1 to 5, characterised in that each fixed wall (5 or 6) is spaced from the surface of the associated roller by an amount which is substantially constant for every circumferential position along said wall.

7. An apparatus according to one of Claims 1 to 6, characterised in that it comprises at least one pressure probe which makes it possible to regulate the rate of flow of the extruder (3 or 4) and the speed of the corresponding roller (7 or 8).

8. A method of extrusion for forming a profiled composite product formed of at least two different rubber mixes arranged on opposite sides of at least one line of separation, consisting in applying onto a first rotating roller (7) a first profiled product (1) by means of a fixed wall (5) cooperating with said first rotary roller (7) to define the profile of the first mix which includes said line of separation, consisting in applying on a profiled roller (8) rotating in the opposite direction arranged adjacent to the first roller (7) so as to define between the rollers a passage having a given profile, said passage being spaced downstream from the place where the first product is applied, applying, at a place spaced upstream of said passage, a second product (2) having a profile including said line of separation, so that the first product (1) and the second product (2) are superimposed along said line of separation, upon passage between said rollers, when they are carried therein by the rotation of said rollers.

9. A method according to Claim 8, characterised in that the first roller is cylindrical.

10. A method according to Claim 8 or 9, characterised in that the first product is applied to the first roller by means of at least one extruder.

11. A method according to one of Claims 8 or 10, characterised in that the second product is applied on the profiled roller by means of at least one extruder.

## Patentansprüche

1. Vorrichtung zur Extrusion zum Herstellen eines Produkts, das aus unterschiedlichen Rohgummimischungen gebildet ist, mit einer ersten rotierenden Walze (7) und mindestens einer anderen rotierenden Walze (8), die profiliert ist, wobei die profilierte Walze benachbart zur ersten Walze (7) angeordnet ist und die Drehachsen der Walzen parallel sind, so daß auf diese Weise zwischen den Walzen ein Durchlaßabschnitt für den Gummi gebildet ist, und mit Mitteln, die es gestatten, die verschiedenen Mischungen in den genannten Durchlaßabschnitt mitzunehmen,
**dadurch gekennzeichnet, daß**
die genannten Mittel einen ersten Extruder (3) aufweisen, der eine Gummimischung (1) durch eine Extrusionsöffnung preßt, die eine feste Wand (5) aufweist, welche mit der genannten ersten, rotierenden Walze (7) zusammenwirkt, um das Profil der ersten Mischung zu bilden, und daß sie einen zweiten Extruder (4) aufweist, der eine zweite Gummimischung (2) durch eine Extrusionsöffnung preßt, die eine feste Wand (6) aufweist, welche mit der genannten profilierten, rotierenden Walze (8) zusammenwirkt, um das Profil der zweiten Gummimischung zu bilden, wobei das profilierte Endprodukt durch Überlagerung der Mischungen bei ihrem Durchtritt zwischen den Walzen (7) und (8) geformt wird.

2. Vorrichtung nach Anspruch 1, dadurch gekennzeichnet, daß das Profil der festen Wand (6), die mit der profilierten Walze (8) zusammenwirkt, eine komplementäre Form zum Profil der festen Wand (5) aufweist, die mit der ersten Walze (7) zusammenwirkt.

3. Vorrichtung nach einem der Ansprüche 1 bis 2, dadurch gekennzeichnet, daß die genannten festen Wände (5, 6) einander schneidende Flächen sind.

4. Vorrichtung nach einem der Ansprüche 1 bis 3, dadurch gekennzeichnet, daß die genannten festen Wände (5, 6) an ein und demselben Teil ausgebildet sind.

5. Vorrichtung nach einem der Ansprüche 1 bis 4, dadurch gekennzeichnet, daß die erste Walze (7) zylindrisch ist.

6. Vorrichtung nach einem der Ansprüche 1 bis 5, dadurch gekennzeichnet, daß jede feste Wand (5 oder 6) in Bezug auf die zugeordnete Walze um einen im wesentlichen konstanten Wert für jede Umfangslage längs der gesamten Wand abgesetzt ist.

7. Vorrichtung nach einem der Ansprüche 1 bis 6, dadurch gekennzeichnet, daß sie mindestens einen Druckfühler aufweist, der es gestattet, den Durchsatz des Extruders (3 oder 4) und die Geschwindigkeit der entsprechenden Walze (7 oder 8) einzustellen.

8. Verfahren zur Extrusion zum Bilden eines komplexen, profilierten Produkts, das aus mindestens zwei unterschiedlichen Gummimischungen gebildet ist, die beiderseits mindestens einer Trennlinie angeordnet sind, das darin besteht, auf eine erste rotierende Walze (7) ein erstes profiliertes Produkt (1) mittels einer festen Wand (5) aufzubringen, die mit der genannten ersten drehbaren Walze (7) zusammenwirkt, um das Profil der ersten Mischung festzulegen, das die genannte Trennlinie miteinschließt, und darin besteht, auf eine gegenläufig drehbare, profilierte Walze (8), die zur ersten Walze (7) derart benachbart angeordnet ist, daß zwischen den Walzen ein Durchlaß abgegrenzt ist, der ein vorbestimmtes Profil aufweist, wobei der genannte Durchlaß von der Stelle, an der man das erste Produkt aufbringt, in Flußrichtung entfernt ist, an einer Stelle, die vom genannten Durchlaß entgegen der Flußrichtung entfernt ist, ein zweites Produkt (2) aufbringt, das ein Profil darbietet, das die genannte Trennlinie miteinschließt, und zwar derart, daß das erste Produkt (1) und das zweite Produkt (2) einander längs der genannten Trennlinie am Durchlaß zwischen den genannten Walzen überlagern, wenn sie durch die Drehung der genannten Walzen angetrieben sind.

9. Verfahren nach Anspruch 8, dadurch gekennzeichnet, daß die erste Walze zylindrisch ist.

10. Verfahren nach Anspruch 8 oder 9, dadurch gekennzeichnet, daß das erste Produkt auf der ersten Walze mittels mindestens eines Extruders aufgebracht wird.

11. Verfahren nach einem der Ansprüche 8 oder 10, dadurch gekennzeichnet, daß das zweite Produkt auf der profilierten Walze mittels mindestens eines Extruders aufgebracht wird.
